# EUROPEAN PATENT SPECIFICATION

(11) **EP 1 189 179 B1**
(45) Date of publication and mention of the grant of the patent: **10.10.2007**
(21) Application number: 01660157.7
(22) Date of filing: 31.08.2001
(51) Int. Cl.: G07F 19/00, G07F 7/08

(54) **A method for loading money, an electronic device, and a system**
Verfahren, Vorrichtung und System zum Laden von elektronischem Geld
Méthode, dispositif et système pour charger de l'argent électronique

(30) Priority: 04.09.2000 FI 20001939
(43) Date of publication of application: 20.03.2002
(73) Proprietor: Nokia Corporation, 02150 Espoo (FI)
(72) Inventor: Uusilehto, Janne, 33100 Tampere (FI)
(74) Representative: Pursiainen, Timo Pekka

(56) References cited:
- EP-A- 0 640 945
- EP-A- 0 666 549
- WO-A-98/37524
- WO-A-98/44429
- US-A- 5 704 046
- US-A- 6 078 806

## Description

The present invention relates to a method for loading money according to the preamble of the appended claim 1. The invention also relates to an electronic device according to the preamble of the appended claim 9, an ATM according to claim 13 as well as a system according to the preamble of the appended claim 14.

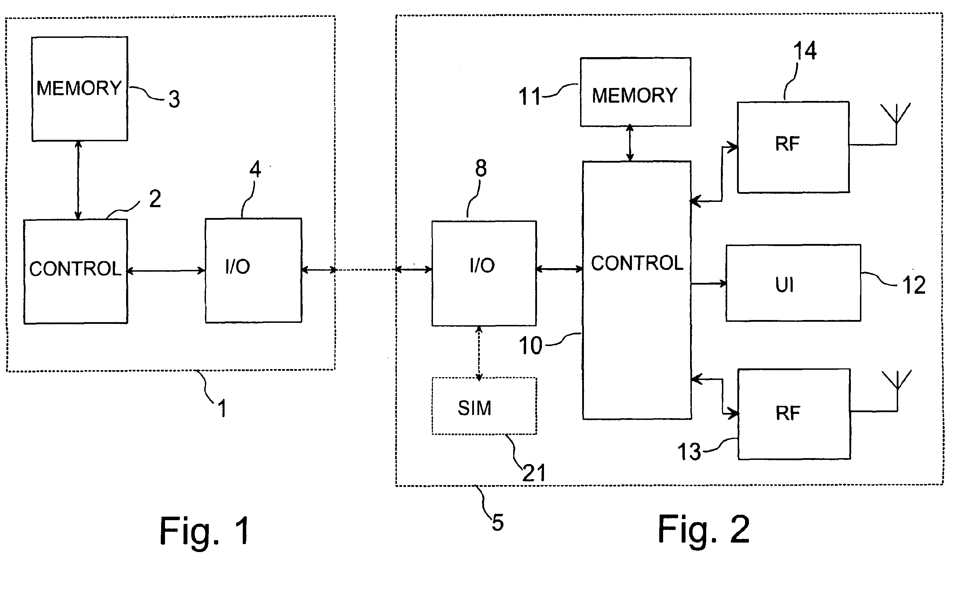

So-called cash cards are currently known, in which a user can load money in electrical form from an automatic teller machine (ATM) or the like. The user can use such a cash card for paying purchases at stores which have a card reader capable of reading the cash card. Such cash cards are typically based on smart card technology, wherein the card is provided with a microcircuit in which the cash card functions are implemented. Figure 1 shows such a cash card implementation in a reduced block chart. The cash card 1 comprises a processor 2, a memory 3, as well as connection means 4. The processor 2 is used for processing the software necessary for the function of the cash card. The software is stored in a memory 3 which preferably comprises a read-only memory as well as a non-volatile random access memory. The read-only memory is used for storing programs, and the random access memory is used *e.g.* to indicate how much money is stored on the card. The connection means 4 make communication between the cash card and an external device possible *e.g*. upon loading money as well as upon paying.

To prevent abuse, various check-ups and encryptions are used in the implementation of the cash card to secure, upon loading of money, firstly that the person using the card is authorized to load money on the card and also that the sum of money to be transferred onto the card corresponds to the sum of money to be charged on the user's account. In a corresponding manner, when the cash card is used for payment, it can be checked that the person in possession of the card is authorized to pay with the card, that the sum of money on the card is sufficient for making the payment, and that the correct sum of money is transferred from the card to the recipient of the payment. Such a cash card is also called an electronic wallet. However, these check-ups are not performed upon payment with all cash card applications.

At present, cash cards can already be used for making a payment in several places. For example, in numerous stores, public swimming pools, taxes, hotels, *etc.,* payments can be made by using a cash card. Furthermore, cash card applications are known which are only intended for specific uses, such as payment of a bus trip.

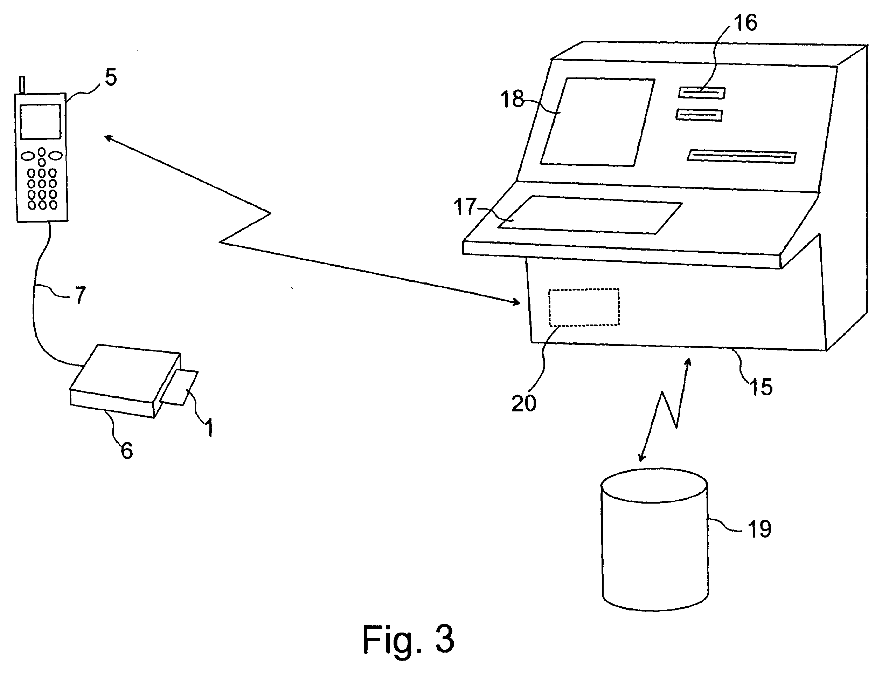

Money is loaded on the cash card at an automatic teller machine provided with a card reader for such a cash card. Thus, the user inserts the cash card in a card slot 16 (Fig. 3) intended for this purpose and provided with means for arranging communication between the card and the automatic teller machine. After this, the user uses a keyboard 17 to enter his/her personal identification number, after which the cash card and/or the automatic teller machine checks that the personal identification number has been correctly entered and that the card has not been deactivated for example for the reason that the card is reported to be stolen. If the card is in order and the personal identification number has been correctly entered, money can be loaded. The automatic teller machine requests the user to enter a sum that the user wishes to be loaded on the card. At this stage, the automatic teller machine can also display the sum of money available on the card at that moment, on a display 18. After the desired sum has been entered, the automatic teller machine transfers the money *e.g*. from a bank data system 19 onto the card. Thus, the sum of money transferred to the card is charged from a bank account, and the sum of money available on the card is increased respectively. Information on the money on the card is stored in the memory 3 of the cash card.

At the stage when the user wishes to pay with the cash card, the cash card is placed in a card reader and the user enters his/her personal identification number to confirm that the card belongs to the user. Information on the sum of money which should be charged from the card is transmitted from a cash register. After this, the card reader checks that the sum of money available on the card is sufficient for making the payment. If the sum of money is sufficient for making the payment, the sum of money corresponding to the payment is charged from the cash card and this sum of money is deposited on the account of the recipient of the payment. Thus, when the cash card is used, it is not actual physical money that is transmitted but information, wherein it is easier to use the cash card.

A drawback in using such a cash card is *e.g*. the fact that to load money, the user must find an automatic teller machine with means for loading the cash card. Furthermore, the user must insert the cash card in a card reader and enter his/her personal identification number and the sum of money to be transferred. In some situations, the user may forget to load money on the card, wherein upon making a payment, the sum of money on the card is not necessarily sufficient for making the payment. Thus, the user must find a suitable automatic teller machine, load money on the card and return to pay his/her purchases.

A wireless cash card has also been developed. In this case, the cash card is inserted in a connection device provided with wireless communication means. Thus, the cash card can communicate *e.g*. with a wireless phone equipped with corresponding wireless communication means. Thus, the user can load money on the cash card in such a way that the wireless phone sets up a data transmission connection *e.g.* to the home page of the issuer of the cash card in the Internet. This home page comprises an application whereby the user can load money in the same way as when loading money at an automatic teller machine. Consequently, the user enters his/her identification number and the sum of money to be loaded. The information on the sum of money to be transferred is transferred by means of a mobile communication network to the wireless phone and further via a local wireless communication connection to the cash card. Also this arrangement has, for example, the drawback that the user must enter his/her personal identification number and the sum of money to be transferred. Furthermore, if the communication connection is loaded, the loading of money can take a long time. In some situations, it may happen that the loading of money is not successful.

Document US-6,078,806 presents a method, which is provided for using an application in a mobile station. The application has a first mode of operation and a second mode of operation. The first mode is passive and in the second mode the application controls a master control unit of the mobile station. By means of a mobile station equipped with a suitable application module the user can make payments in a shop using his/her credit account or pay directly from his/her bank account, and thus no real cash is needed. It is also possible to load money on request to the mobile station. The loading is performed by sending a request to send more digital cash from the mobile station to a money server responsible for the user's account. The request can be sent as an SMS, for example.The user has to initiate the money transfer.

Document WO 98/44429 presents a smart card payment system using stored value in the form of serialized electronic coins and electronic bills, which provides efficient security monitoring without the need for full centralized accounting of each transaction.

Document EP 0 640 945 relates to the integrated point-of-sale multiple application system wherein a single set of consumer items may be purchased by debiting any of a plurality of accounts stored on a smart card. Accounts are implemented, for example, by service providers such as Visa, MasterCard, Discover, ATM networks or the like. In connection with the electronic purse of the smart card, the Holder may instruct the smart card to automatically contact the Holder's bank when the money value in the smart card is below a certain limit and transfer some additional funds into the smart card.

Document EP 0 666 549 presents a commercial transaction system, in which a user uses a card device to interact with sales or transaction terminals to conduct cashless transactions. In accordance with this solution, when the existing balance associated with the card does not cover the price of the transaction, the system provides an automatic renewal feature, which automatically increases the balance of the card device by a predetermined amount.

Document WO 98/37524 relates to a method of transaction between a customer and a terminal, which is connected to a telecommunication network, wherein at least one customer identification, a terminal identification and transaction specific data are transmitted to a financial server connected to a network. Money transfer can be performed in different monetary units and that a maximum and/or a minimum amount to be transferred from the card can be defined. A server downloads correct exchange rates to the POTs when they are changed.

Document US-5,704,046 presents a system, which includes an automatic renewal feature, which will automatically increase the balance associated with a user's financial card of a particular financial card company at the time of the transaction without interruption, and specifically without requiring the user to obtain separately an increase in the funds allocated to his or her card. Upon automatic renewal, the issuing bank, which has been informed of the automatic renewal by the FCC, bills the customer for the increase and preferably places the increased amount into a separate account out of which the amount of the transaction is withdrawn.

It is an aim of the present invention to eliminate the above-mentioned drawbacks to a major extent and to provide a method for loading money on a cash card, whereby the loading of money is performed automatically. The invention is based on the idea that the loading of money on the card is performed automatically in the vicinity of an automatic teller machine, if the sum of money on the card is smaller than a predetermined limit. The method according to the present invention is primarily characterized in what will be presented in the characterizing part of the appended claim 1. The electronic device according to the present invention is primarily characterized in what will be presented in the characterizing part of the appended claim 9. The automatic teller machine according to the present invention is characterized in what will be presented in the characterizing part of the appended claim 13. Further, the system according to the present invention is primarily characterized in what will be presented in the characterizing part of the appended claim 14.

Considerable advantages are achieved by the present invention when compared with cash card solutions of prior art. Applying the method of the invention, the loading of money on the card can be performed automatically, wherein the user does not need specifically to go to an automatic teller machine, to insert the card in a card reader, and to enter the personal identification number and the sum of money to be loaded. Thus, the user does not necessarily even notice that more money has been loaded on the card. Consequently, this arrangement saves the user's time. Automatic loading of money also has the advantage that the user does not need to remember to load money on the card.

In the following, the invention will be described in more detail with reference to the appended drawings, in which
- Fig. 1: shows a cash card according prior art in a reduced block chart,
- Fig. 2: shows, in a reduced block chart, an electronic device that can be used in connection with the method according to a preferred embodiment of the invention,
- Fig. 3: shows an example of a system in which the method according to a preferred embodiment of the invention can be applied, and
- Fig. 4: shows, in a block chart, different steps in the method according to a preferred embodiment of the invention.

The following is a description on the operation of the method according to an advantageous embodiment of the invention, using a cash card 1 shown in Fig. 1 as an example of a cash card and an electronic device 5 shown in Fig. 2 as an example of an electronic device. The user places the cash card 1 in a card reader 6, as shown in Fig. 3. The card reader 6 is arranged in a data transmission connection with the electronic device 5. This data transmission connection can be a wired data transmission connection, wherein a cable 7 is coupled between the electronic device 5 and the card reader 6, or the data transmission connection can be a wireless data transmission connection, such as a short-range radio connection, of which one example to be mentioned in this context is the Bluetooth^{™} system. If the data transmission connection used between the electronic device 5 and the card reader 6 is a wireless data transmission connection, the card reader 6 must be provided with a separate power supply by means of batteries or the like. However, if a wired data transmission connection is used between the electronic device 5 and the card reader 6, the power supply for the card reader 6 and simultaneously for the cash card 1 can be arranged by means of a cable 7 from the electronic device 5. The electronic device 5 used in this preferred embodiment is a wireless communication device, but it is obvious that also other electronic devices can be used in connection with the invention. The electronic device 5 is provided with first connection means 8 for providing communication between the electronic device 5 and the card reader 6. The electronic device 5 is provided with first connection means 9 for providing communication between the electronic device 5 and the card reader 1. These communication means 9 of the card reader are coupled with the communication means 4 of the cash card 1. These communication means 9 of the card reader 6 comprise for example mechanical coupling means for coupling the conductors of the cable 7 to corresponding pins (not shown) in the connection means 4 of the remote card 1. Thus, the connection wire 7 preferably has a conductor for each pin in the connection means 4 of the remote card. It is obvious that the card reader 6 can also comprise connection means 9 of another type, in which it is possible to make *e.g*. protocol conversions and other data processing operations. Thus, data can be transmitted from the card reader 6 to the electronic device 5 in a different format than when transferred directly from the cash card 4 to the electronic device 5. If a wireless data transmission connection is used between the electronic device 5 and the card reader 6, the connection means 9 of the card reader 6 comprise means for implementing this wireless data transmission connection.

The electronic device 5 preferably comprises a processor 10, memory means 11, a user interface 12, a radio part 13, and local communication means 14.

When the cash card 1 is placed in the card reader 6, the cash card 1 is preferably identified in the following way. The electronic device 5 identifies the type of the cash card 1 and requests the user to give his/her own personal identification number corresponding to this cash card. The identification number is transmitted from the electronic device 5 to the cash card 1, in which the connection means 4 transfer the information to the processor 2. The processor 2 checks that the identification number corresponds to the identification number stored on the card 1, after which the cash card 1 transmits acceptance information to the electronic device 5. If the identification number does not match, the cash card 1 reports to the electronic device 5 that the identification number is incorrect. If the identification number has been correctly entered, the user can for example check the balance on the cash card 1 by selecting the respective function by means of the user interface 12 of the electronic device 5. By means of the user interface 12, the user can also switch on the function of automatic loading by the electronic device 5. In this connection, the user can also set a condition for performing the automatic loading. This loading condition can be *e.g.* a minimum limit, a maximum limit, an average balance on the card, a day and time of the week, a location, *etc.* The minimum limit indicates how much money the user wishes to have on the cash card 1. In addition to the minimum limit, the user can advantageously set the sum of money to be loaded at a time, or the setting can be made to load so much money on the cash card 1 that the minimum limit will be exceeded. By setting a maximum limit, the user can restrict the balance of the card to a desired upper limit, wherein upon loading the card, it is checked that the maximum balance will not be exceeded. An average card balance can be determined *e*.*g*. for a time of a month, wherein upon loading the card, a sum of money is loaded whereby the balance of the card is made substantially to the averange balance. Furthermore, the above-mentioned loading condition based on time can be applied for example in such a way that for a weekend, a larger sum of money is loaded on the card than for weekdays. The loading condition can also be limited to time, wherein, for example, a smaller minimum and/or maximum limit is used in the evening than in daytime. The location data can be determined *e.g.* for an automatic teller machine, wherein loading is performed *e.g.* when the user is in the vicinity of an automatic teller machine located at a shopping centre, a service station or the like. It is obvious that in connection with the present invention, also other loading conditions can be determined than those presented above, and that different loading conditions can also be used in combination, *e.g*. minimum and maximum limits.

Furthermore, the personal identification number entered by the user can be stored *e.g*. in the memory means 11 of the electronic device 5, wherein the user does not need to enter the identification number upon automatic loading according to a preferred embodiment of the invention. The user can also set the identification number of the cash card to be the same as the identification number possibly related to the user of the electronic device 5, such as the PIN code (Personal Identity Number) known from wireless communication devices.

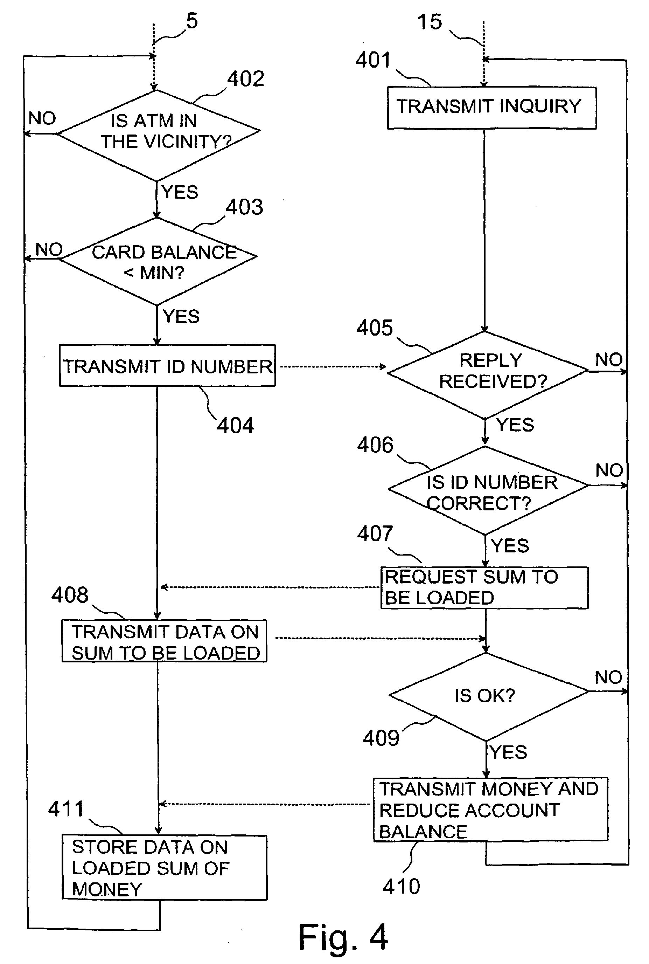

Turning on the automatic loading function will set the local communication means 14 of the electronic device 5 to receive a signal transmitted by an automatic teller machine 15 preferably at intervals (Fig. 3). Thus, in a situation in which the user is in the vicinity of an automatic teller machine 15 provided with wireless local communication means 20 for automatic loading, the local communication means 14 of the electronic device 5 receive an inquiry message transmitted by the automatic teller machine 15. In the flow chart of Fig. 4, the transmission and the examination of this inquiry message are represented by blocks 401 and 402, respectively. After the electronic device 5 has received the inquiry message, the electronic device 5 checks the sum of money on the cash card 1 (block 403). If the sum of money on the cash card 1 is smaller than the set minimum balance, money will be loaded on the cash card 1.

In a preferred embodiment of the invention, money is loaded in the following way. The electronic device 5 transmits the identification number of the cash card 1 by the local communication means 14 (block 404). The automatic teller machine 15 listens if any device has replied to the inquiry message (block 405). After the automatic teller machine 15 has received the identification number transmitted from the electronic device 5, the automatic teller machine 15 checks that the identification number corresponds to an identification number stored in the bank data system 19 (block 406). After checking the identification number and verifying that it is correct, the automatic teller machine 15 sends an acknowledgement message and inquires the sum of money to be loaded (block 407). After receiving the acknowledgement and inquiry message, the electronic device 5 investigates how much money should be loaded on the cash card 1. The sum of money to be loaded is either fixed or such that the minimum limit will be exceeded, as already mentioned above in this description. The electronic device 5 transmits information about the sum of money to be loaded by the local communication means 4 (block 408). After this, the automatic teller machine 15 checks the balance on the account (block 409), and if the account balance is sufficient for performing the loading, the automatic teller machine 15 sends a message informing about loading of the money (block 410). If the sum of money on the account is not sufficient for performing the loading, the automatic teller machine sends *e.g.* information on how much money is available on the account for loading, or sets the sum of loading to be for example zero, wherein the electronic device 5 can deduce on the basis of this that no money can be loaded on the card 1. On the other hand, bank accounts with credit facility are known, wherein the amount exceeding the balance on the account is booked as credit for the user and loading can be performed normally.

The electronic device 5 receives the message transmitted by the local communication means 20 of the automatic teller machine 15, examines from the message *e.g.* the sum of money to be transmitted, and then stores it on the cash card 1 (block 411). The loading of money is preferably performed in the following way. The electronic device 5 transmits a message via the first connection means 8 to the cash card 1, and in this message, information is transmitted about the sum of money to be deposited on the card 1. The processor 2 of the cash card 1 checks the validity of the data transmission, after which the processor 2 changes the information in the memory 3 about the sum of money stored on the card 1 to correspond to the new situation.

It is obvious that in the above-mentioned operations of money transfers, various confirmations and checkings are performed, and further, the information is transmitted in encrypted format to prevent abuse. However, this is prior art known by anyone skilled in the field, wherein its description in more detail will not be necessary in this context.

In the above description of the method according to a preferred embodiment of the invention, a system was used where the electronic device 5, the card reader 6 and the cash card 1 are separate devices; however, it is obvious that also other types of systems can be applied in connection with the invention. For example, the functions of the card reader 6 can be implemented in connection with the electronic device 5, wherein the cash card 1 is placed in corresponding means in the electronic device 1 to connect the cash card 1. In another embodiment, the cash card 1 can be implemented in connection with another card, such as an identification card 21 (shown with broken lines in Fig. 2) for a user of a wireless communication device, preferably in connection with a SIM card (Subscriber Identity Module). In this case, a separate cash card 1 is not necessarily required. In this embodiment, payment is made in a wireless manner for example by means of the local communication means 14 of the electronic device 5. Thus, the receiver of the payment should have a corresponding device which is capable of communicating with the electronic device 5. On the other hand, the payment can also be made by means of the radio part 13, wherein separate local communication means 14 are not necessarily needed in connection with the payment.

The following is a description on the operation of the method according to an advantageous embodiment of the invention, using as an example of an electronic device an electronic device 5 in which the functions of the cash card 1 are provided in connection with a user identification card 21. In this context, the GSM mobile phone should be mentioned as a non-limiting example of such a wireless communication device. In this embodiment, the electronic device 5 does not necessarily require a card reader 6 or a cable 7. Furthermore, as the cash card controller 2, memory 3 and communication means 4, the corresponding functional blocks of the identification card are advantageously used, but for clarity, they are not shown in connection with the identification card of Fig. 2.

The user has turned on the wireless communication device, wherein it has logged in a mobile communication network (not shown) in a way known as such, if it has been possible in view of the resources and connection quality in the mobile communication network at the time. In the method, to determine the need for loading money, the realization of the loading condition determined for the cash card is preferably examined at intervals and/or in connection with a payment operation, *e.g.* by comparing the deposited sum of money with the set minimum sum. If the loading condition is fulfilled, it is examined if the wireless communication device can set up a connection to the mobile communication network at the moment. If a connection can be set up, a loading request is transmitted from the wireless communication device 5 to the mobile communication network, from which it is further transmitted to the data system of the financial institution *e.g*. by calling a determined telephone number. After this, the wireless communication device 5 and the data system of the financial institution communicate with each other *e.g.* to find out the user's account data. Furthermore, the electronic device 5 transmits information about the sum of money to be loaded.

After this, the money is transferred from the data system of the financial institution to the wireless communication device 5 via the mobile communication network by using communication methods known as such. In the wireless communication device 5, the sum of money deposited on the cash card is changed accordingly. In this embodiment, the means 15 for loading money thus comprise a mobile communication network.

If the cash card 1 used is a separate cash card known as such, the payment can be made in a way known as such by removing the cash card 1 from the card reader 6 and placing it in the corresponding card reader of the recipient of the payment. Thus, the user enters his/her personal identification number, after which a sum of money corresponding to the payment is deduced from the cash card 1 presuming that the sum of money on the cash card 1 is sufficient for making the payment.

The invention has been described above in connection with the cash card 1; however, the method according to the invention can also be applied in connection with charge cards intended for the payment of *e.g.* bus fees. Thus, means for performing loading are provided *e.g.* in the vicinity of bus stops. These loading means preferably transmit inquiry messages, wherein an electronic device 5 located in its close vicinity and complying with an advantageous embodiment of the invention, detects the inquiry message, checks the sum of money on the charge card, and if the sum of money is smaller than the set minimum limit, money is loaded on the charge card. On such a charge card, it is possible to load *e.g*. a certain sum of money or a sum of money corresponding to a certain number (*e.g.* 1) of bus trips.

It is obvious that the present invention is not limited solely to the above-presented embodiments, but it can be modified within the scope of the appended claims.

## Claims

1. A method for loading money from money loading means (15) to money depositing means (1), wherein money is deposited in electrical format, **characterized by**
defining a loading condition for loading money to the money depositing means (1);
wirelessly transmitting an inquiry message at intervals by the money loading means (15)
examining whether the inquiry message transmitted by the money loading means can be received,
wherein if the examination indicates that the inquiry message transmitted by the money loading means can be received by the money depositing means (1), the method further comprises examining said loading condition, wherein if the examination indicates that the loading condition is fulfilled, the loading takes place automatically.

2. The method according to claim 1, **characterized in that** said loading condition used is a minimum sum, wherein in the method, the sum of money deposited in the money depositing means (1) is compared with said minimum sum, and loading takes place, if the deposited sum of money is smaller than said minimum sum.

3. The method according to claim 1 or 2, **characterized in that** said loading condition used is a maximum sum, wherein in the method, the sum of money deposited in the money depositing means (1) is compared with said maximum sum, and loading takes place, if the deposited sum of money is smaller than said maximum sum.

4. The method according to claim 1, 2 or 3, **characterized in that** in the method, also the sum of money to be loaded at each loading time is determined.

5. The method according to any of the claims 1 to 4, **characterized in that** in connection with the loading of money, an identification number is transmitted to the money loading means (15) for identification of the user.

6. The method according to any of the claims 1 to 5, **characterized in that** a cash card is used as the money depositing means (1).

7. The method according to any of the claims 1 to 6, **characterized in that** an automatic teller machine is used as the money loading means (15).

8. The method according to any of the claims 1 to 6, **characterized in that** a mobile communication network is used as the money loading means (15).

9. An electronic device (5) comprising:
money depositing means (1);
means (13) for setting up a data transmission connection to money loading means (15); and
means (8, 10, 13) for loading money from the money loading means (15) to the money depositing means (1),
**characterized in that** the electronic device (5) further comprises
means (12) for determining a loading condition for loading money from the money loading means (15) to the money depositing means (1);
means (13) for receiving an inquiry message wirelessly transmitted at intervals by the money loading means (15);
means (10, 13) for examining whether the inquiry message transmitted by the money loading means (15) can be received; and
means (10) for examining the loading condition, wherein the loading is arranged to be performed automatically, if the inquiry message transmitted by the money loading means (15) can be received and if said loading condition is fulfilled.

10. The electronic device according claims 9, **characterized in that** the money depositing means (1) comprise a cash card.

11. The electronic device (5) according to any of the claims 9 to 10, **characterized in that** it comprises an identification card for identifying the user of the electronic device, and that the money depositing means (1) are arranged in connection with said identification card.

12. The electronic device (5) according to any of the claims 9 to 11, **characterized in that** it comprises means for performing functions of a mobile station.

13. An automatic teller machine (15) comprising
means (20) for setting up a data transmission connection between an electronic device (5) and the automatic teller machine (15); and
means (19, 20) for loading money from the automatic teller machine (15) to the money depositing means (1) of the electronic device (5);
**characterized in that** the system comprises communication means (20) for wirelessly transmitting an inquiry message at intervals;
said communication means (20) being adapted to receive a reply to the inquiry message from the electronic device (5), said electronic device (5) being adapted to transmit said reply when the electronic device has received said inquiry message and detected that a determined loading condition for loading money from the automatic teller machine (15) to the money depositing means (1) has been fulfilled;
wherein said means (19, 20) for loading money are adapted to automatically perform the loading of money after the reception of the reply from the electronic device.

14. A system for loading money, comprising
money loading means (15),
money depositing means (1) of an electronic device (5);
means (13, 20) for setting up a data transmission connection between the electronic device (5) and the money loading means (15); and
means (8, 10, 13) for loading money from the money loading means (15) to the money depositing means (1);
**characterized in that** the system further comprises
means (12) for determining a loading condition for loading money from the money loading means (15) to the money depositing means (1);
means (20) for wirelessly transmitting at intervals an inquiry message from the money loading means (15);
means (10, 13) for examining whether the inquiry message transmitted by the money loading means (15) can be received; and
means (13) for receiving the inquiry message transmitted by the money loading means (15); and
means (10) for examining the loading condition, wherein the loading is arranged to be performed automatically, if the inquiry message transmitted by the money loading means (15) can be received and if said loading condition is fulfilled.

## Patentansprüche

1. Verfahren zum Laden von Geld von Geld-Lademitteln (15) auf Geld-Ablegemittel (1), wobei Geld in elektrischem Format abgelegt wird, **gekennzeichnet durch**
Definieren einer Ladebedingung zum Laden von Geld auf die Geld-Ablegemittel(1);
drahtloses Übertragen einer Abfragenachricht in Intervallen **durch** die Geld-Lademittel (15);
Prüfen, ob die Abfragenachricht, welche **durch** die Geld-Lademittel übertragen wird, empfangen werden kann,
wobei, wenn die Prüfung angibt, dass die Abfragenachricht, welche **durch** die Geld-Lademittel übertragen wird, **durch** die Geld-Ablegemittel (1) empfangen werden kann, das Verfahren weiter Prüfen der Ladebedingung umfasst, wobei, wenn die Prüfung angibt, dass die Ladebedingung erfüllt ist, das Laden automatisch stattfindet.

2. Verfahren nach Anspruch 1, **dadurch gekennzeichnet, dass** die Ladebedingung, welche verwendet wird, ein minimaler Betrag ist, wobei, in dem Verfahren, der Geldbetrag, welcher in den Geld-Ablegemitteln (1) abgelegt ist, mit dem minimalen Betrag verglichen wird, und Laden stattfindet, wenn der abgelegte Geldbetrag kleiner ist als der minimale Betrag.

3. Verfahren nach Anspruch 1 oder 2, **dadurch gekennzeichnet, dass** die Ladebedingung, welche verwendet wird, ein maximaler Betrag ist, wobei, in dem Verfahren, der Geldbetrag, welcher in den Geld-Ablegemitteln (1) abgelegt ist, mit dem maximalen Betrag verglichen wird, und Laden stattfindet, wenn der abgelegte Geldbetrag kleiner ist als der maximale Betrag.

4. Verfahren nach Anspruch 1, 2 oder 3, **dadurch gekennzeichnet, dass**, in dem Verfahren, auch der Geldbetrag, welcher zu jeder Ladezeit zu laden ist, bestimmt wird.

5. Verfahren nach einem der Ansprüche 1 bis 4, **dadurch gekennzeichnet, dass**, in Verbindung mit dem Laden von Geld, eine Identifikationsnummer an die Geld-Lademittel (15) übertragen wird, zur Identifikation des Benutzers.

6. Verfahren nach einem der Ansprüche 1 bis 5, **dadurch gekennzeichnet, dass** eine Cash-Karte als das Geld-Ablegemittel (1) verwendet wird.

7. Verfahren nach einem der Ansprüche 1 bis 6, **dadurch gekennzeichnet, dass** ein Geldautomat als das Geld-Lademittel (15) verwendet wird.

8. Verfahren nach einem der Ansprüche 1 bis 6, **dadurch gekennzeichnet, dass** ein mobiles Kommunikationsnetz als das Geld-Lademittel (15) verwendet wird.

9. Elektronische Vorrichtung (5) umfassend:
Geld-Ablegemittel (1);
Mittel (13) zum Aufbauen einer Datenübertragungsverbindung zu Geld-Lademitteln (15) ; und
Mittel (8, 10, 13) zum Laden von Geld von den Geld-Lademitteln (15) auf die Geld-Ablegemittel (1),
**dadurch gekennzeichnet, dass** die elektronische Vorrichtung (5) weiter Mittel (12) umfasst zum Bestimmen einer Ladebedingung zum Laden von Geld von den Geld-Lademitteln (15) auf die Geld-Ablegemittel (1) ;
Mittel (13) zum Empfangen einer Abfragenachricht, welche in Intervallen drahtlos durch die Geld-Lademittel (15) übertragen wird;
Mittel (10, 13) zum Prüfen, ob die Abfragenachricht, welche durch die Geld-Lademittel (15) übertragen wird, empfangen werden kann; und
Mittel (10) zum Prüfen der Ladebedingung, wobei das Laden vorgesehen ist, automatisch ausgeführt zu werden, wenn die Abfragenachricht, welche durch die Geld-Lademittel (15) übertragen wird, empfangen werden kann, und wenn die Ladebedingung erfüllt ist.

10. Elektronische Vorrichtung nach Anspruch 9, **dadurch gekennzeichnet, dass** die Geld-Ablegemittel (1) eine Cash-Karte umfassen.

11. Elektronische Vorrichtung (5) nach einem der Ansprüche 9 bis 10, **dadurch gekennzeichnet, dass** sie eine Identifikationskarte zum Identifizieren des Benutzers der elektronischen Vorrichtung umfasst, und dass die Geld-Ablegemittel (1) in Verbindung mit der Identifikationskarte vorgesehen sind.

12. Elektronische Vorrichtung (5) nach einem der Ansprüche 9 bis 11, **dadurch gekennzeichnet, dass** sie Mittel umfasst zum Ausführen von Funktionen einer Mobilstation.

13. Geldautomat (15) umfassend
Mittel (20) zum Aufbauen einer Datenübertragungsverbindung zwischen einer elektronischen Vorrichtung (5) und dem Geldautomaten (15); und Mittel (19, 20) zum Laden von Geld von dem Geldautomaten (15) auf die Geld-Ablegemittel (1) der elektronischen Vorrichtung (5);
**dadurch gekennzeichnet, dass** das System Kommunikationsmittel (20) umfasst zum drahtlosen Übertragen einer Abfragenachricht in Intervallen;
wobei die Kommunikationsmittel (20) angepasst sind, eine Antwort auf die Abfragenachricht von der elektronischen Vorrichtung (5) zu empfangen, wobei die elektronische Vorrichtung (5) angepasst ist, die Antwort zu übertragen, wenn die elektronische Vorrichtung die Abfragenachricht empfangen hat und erkannt hat, dass eine bestimmte Ladebedingung zum Laden von Geld von dem Geldautomaten (15) auf die Geld-Ablegemittel (1) erfüllt worden ist;
wobei die Mittel (19, 20) zum Laden von Geld angepasst sind, das Laden von Geld automatisch durchzuführen, nach dem Empfang der Antwort von der elektronischen Vorrichtung.

14. System zum Laden von Geld, umfassend
Geld-Lademittel (15),
Geld-Ablegemittel (1) einer elektronischen Vorrichtung (5);
Mittel (13, 20) zum Aufbauen einer Datenübertragungsverbindung zwischen der elektronischen Vorrichtung (5) und den Geld-Lademitteln (15); und Mittel (8, 10, 13) zum Laden von Geld von den Geld-Lademitteln (15) auf die Geld-Ablegemittel (1);
**dadurch gekennzeichnet, dass** das System weiter Mittel (12) umfasst zum Bestimmten einer Ladebedingung zum Laden von Geld von den Geld-Lademitteln (15) auf die Geld-Ablegemittel (1); Mittel (20) zum drahtlosen Übertragen einer Abfragenachricht in Intervallen von den Geld-Lademitteln (15);
Mittel (10, 13) zum Prüfen, ob die Abfragenachricht, welche durch die Geld-Lademittel (15) übertragen wird, empfangen werden kann; und
Mittel (13) zum Empfangen der Abfragenachricht, welche durch die Geld-Lademittel (15) übertragen wird; und
Mittel (10) zum Prüfen der Ladebedingung, wobei das Laden vorgesehen ist, automatisch ausgeführt zu werden, wenn die Abfragenachricht, welche durch die Geld-Lademittel (15) übertragen wird, empfangen werden kann, und wenn die Ladebedingung erfüllt ist.

## Revendications

1. Procédé de chargement d'argent entre des moyens de chargement d'argent (15) et des moyens de dépôt d'argent (1), dans lequel de l'argent est déposé sous un format électronique, **caractérisé par**
la définition d'une condition de chargement afin de charger de l'argent vers les moyens de dépôt d'argent (1) ;
la transmission sans fil d'un message de demande à des intervalles, par les moyens de chargement d'argent (15),
l'examen du fait que le message de demande transmis par les moyens de chargement d'argent puisse être reçu ou non,
dans lequel, si l'examen indique que le message de demande transmis par les moyens de chargement d'argent peut être reçu par les moyens de dépôt d'argent (1), le procédé comprend en outre l'examen de ladite condition de chargement, où, si l'examen indique que la condition de chargement est satisfaite, le chargement a lieu automatiquement.

2. Procédé selon la revendication 1, **caractérisé en ce que** ladite condition de chargement utilisée est une somme minimum, et **en ce que**, dans le procédé, la somme d'argent déposée dans les moyens de dépôt d'argent (1) est comparée avec ladite somme minimum, et le chargement a lieu si la somme d'argent déposée est inférieure à ladite somme minimum.

3. Procédé selon la revendication 1 ou 2, **caractérisé en ce que** ladite condition de chargement utilisée est une somme maximum, et **en ce que**, dans le procédé, la somme d'argent déposée dans les moyens de dépôt d'argent (1) est comparée avec ladite somme maximum, et le chargement a lieu si la somme d'argent déposée est inférieure à ladite somme maximum.

4. Procédé selon la revendication 1, 2 ou 3, **caractérisé en ce que**, dans le procédé, la somme d'argent à charger à chaque moment de chargement est également déterminée.

5. Procédé selon l'une quelconque des revendications 1 à 4, **caractérisé en ce que**, en relation avec le chargement d'argent, un numéro d'identification est transmis aux moyens de chargement d'argent (15) en vue de l'identification de l'utilisateur.

6. Procédé selon l'une quelconque des revendications 1 à 5, **caractérisé en ce qu'**une carte bancaire est utilisée comme moyens de dépôt d'argent (1).

7. Procédé selon l'une quelconque des revendications 1 à 6, **caractérisé en ce qu'**un guichet bancaire automatique est utilisé comme moyens de chargement d'argent (15).

8. Procédé selon l'une quelconque des revendications 1 à 6, **caractérisé en ce qu'**un réseau de communication mobile est utilisé comme moyens de chargement d'argent (15).

9. Dispositif électronique (5) comprenant :
des moyens de dépôt d'argent (1) ;
des moyens (13) permettant d'établir une connexion de transmission de données avec le moyen de chargement d'argent (15) ; et
des moyens (8, 10, 13) permettant de charger de l'argent entre le moyen de chargement d'argent (15) et le moyen de dépôt d'argent (1),
**caractérisé en ce que** le dispositif électronique (5) comprend en outre
des moyens (12) permettant de déterminer une condition de chargement afin de charger de l'argent entre le moyen de chargement d'argent (15) et les moyens de dépôt d'argent (1) ;
des moyens (13) permettant de recevoir un message de demande transmis sans fil à des intervalles par les moyens de chargement d'argent (15) ;
des moyens (10, 13) permettant d'examiner si le message de demande transmis par les moyens de chargement d'argent (15) peut être reçu ou non ; et
des moyens (10) permettant d'examiner la condition de chargement, dans lequel le chargement est prévu afin d'être effectué automatiquement, si le message de demande transmis par les moyens de chargement d'argent (15) peut être reçu et si ladite condition de chargement est satisfaite.

10. Dispositif électronique selon la revendication 9, **caractérisé en ce que** les moyens de dépôt d'argent (1) comprennent une carte bancaire.

11. Dispositif électronique (5) selon l'une quelconque des revendications 9 à 10, **caractérisé en ce qu'**il comprend une carte d'identification permettant d'identifier l'utilisateur du dispositif électronique, et **en ce que** les moyens de dépôt d'argent (1) sont agencés en relation avec ladite carte d'identification.

12. Dispositif électronique (5) selon l'une quelconque des revendications 9 à 11, **caractérisé en ce qu'**il comprend des moyens permettant d'effectuer les fonctions d'une station mobile.

13. Guichet bancaire automatique (15) comprenant
des moyens (20) permettant d'établir une connexion de transmission de données entre un dispositif électronique (5) et le guichet bancaire automatique (15) ; et
des moyens (19, 20) permettant de charger de l'argent entre le guichet bancaire automatique (15) et les moyens de dépôt d'argent (1) du dispositif électronique (5) ;
**caractérisé en ce que** le système comprend des moyens de communication (20) permettant de transmettre sans fil un message de demande à des intervalles ;
lesdits moyens de communication (20) étant adaptés afin de recevoir une réponse au message de demande de la part du dispositif électronique (5), ledit dispositif électronique (5) étant adapté afin de transmettre ladite réponse lorsque le dispositif électronique a reçu ledit message de demande et a détecté qu'une condition de chargement déterminée permettant de charger de l'argent entre le guichet bancaire automatique (15) et le moyen de dépôt d'argent (1) a été satisfaite ;
dans lequel lesdit moyens (19, 20) permettant de charger de l'argent sont adaptés afin d'effectuer automatiquement le chargement d'argent après la réception de la réponse de la part du dispositif électronique.

14. Système de chargement d'argent, comprenant
des moyens de chargement d'argent (15),
des moyens de dépôt d'argent (1) d'un dispositif électronique (5) ;
des moyens (13, 20) permettant d'établir une connexion de transmission de données entre le dispositif électronique (5) et les moyens de chargement d'argent (15) ; et
des moyens (8, 10, 13) permettant de charger de l'argent entre les moyens de chargement d'argent (15) et le moyen de dépôt d'argent (1) ;
**caractérisé en ce que** le système comprend en outre
des moyens (12) permettant de déterminer une condition de chargement permettant de charger de l'argent entre les moyens de chargement d'argent (15) et les moyens de dépôt d'argent (1) ;
des moyens (20) permettant de transmettre sans fil, à des intervalles, un message de demande depuis les moyens de chargement d'argent (15) ;
des moyens (10, 13) permettant d'examiner si le message de demande transmis par les moyens de chargement d'argent (15) peut être reçu ou non ; et
des moyens (13) permettant de recevoir le message de demande transmis par les moyens de chargement d'argent (15) ; et
des moyens (10) permettant d'examiner la condition de chargement, dans lequel le chargement est prévu afin d'être effectué automatiquement, si le message de demande transmis par les moyens de chargement d'argent (15) peut être reçu et si ladite condition de chargement est satisfaite.
